# EUROPÄISCHE PATENTSCHRIFT

(11) **EP 2 142 888 B1**
(45) Veröffentlichungstag und Bekanntmachung des Hinweises auf die Patenterteilung: **17.12.2014**
(21) Anmeldenummer: 08757997.5
(22) Anmeldetag: 30.04.2008
(51) Int. Cl.: G01C 21/34

(54) **Navigationssystem**
Navigation system
Système de navigation

(30) Priorität: 30.04.2007 DE 102007020622; 25.05.2007 DE 102007024713
(43) Veröffentlichungstag der Anmeldung: 13.01.2010
(73) Patentinhaber: Peiker acustic GmbH & Co. KG, 61381 Friedrichsdorf (DE)
(72) Erfinder: HILLE, Jan, 58507 Lüdenscheid (DE); OLBERG, Klaus, 57462 Ople (DE); KROMER-VON BAERLE, Reinhard, 61352 Bad Homburg (DE); RICHTER, Lutz, P., 15299 Mixdorf (DE)
(74) Vertreter: Otten, Herbert
(86) Internationale Anmeldenummer: PCT/DE2008/000736
(87) Internationale Veröffentlichungsnummer: WO 2008/131752

(56) Entgegenhaltungen:
- EP-A- 1 055 911
- DE-A1- 10 032 921
- DE-A1-102004 036 564
- US-A1- 2003 114 980
- US-A1- 2003 228 879

## Beschreibung

Die Erfindung betrifft ein Navigationssystem nach Anspruch 1. Aus der WO 2004/113842 A1 ist ein Navigationssystem bekannt, bei welchem eine mobile Empfangseinheit wie zum Beispiel ein Mobiltelefon oder ein PDA Positionsdaten empfängt und diese an eine im Fahrzeug angeordnete zentrale Steuereinheit weiterleitet, wobei die Navigation auf der Grundlage der Positionsdaten aus der mobilen Empfangseinheit in der zentralen Steuereinheit erfolgt. Nachteilig an einem derartigen zweiteiligen Navigationssystem ist der hohe technische Aufwand für die zentrale Steuereinheit, welcher diese teuer macht, da diese bis auf den GPS-Empfänger sämtliche für die Navigation erforderlichen Komponenten umfasst.

Aus der DE 10 2004 036 564 A1 ist ein Navigationsgerät bekannt, welches ein für einen mobilen Einsatz vorgesehenes Gerät mit Ein- und Ausgabemitteln, mit einem Prozessor zur Abarbeitung einer Software, mit einer Navigationssoftware zur Positionsbestimmung und zur Routenbestimmung und mit einer ersten Schnittstelle zur Übertragung von Informationen in das und/oder aus dem Gerät umfasst, wobei die erste Schnittstelle dazu ausgebildet ist, bei Betrieb des Geräts in einem Kraftfahrzeug über eine zweite Schnittstelle des Kraftfahrzeugs Betriebs- und/oder Sensordaten mindestens einer Fahrzeugkomponente in das Gerät einzulesen.

Aus der DE 100 32 921 A1 ist eine Recheneinheit zur Durchführung eines Verfahrens zur Ermittlung und Ausgabe von Fahrhinweisen für eine Reiseroute von einem Startpunkt zu einem Fahrziel bekannt, wobei eine Recheneinheit zumindest zeitweise mit einer Dienstezentrale in Verbindung gebracht wird, wobei der Startpunkt und das Fahrziel an die Dienstezentrale übermittelt werden, wobei die Reiseroute von der Dienstezentrale bestimmt wird, wobei von der Dienstezentrale aus der Reiseroute eine Abfolge von Fahrhinweisen bestimmt und die Abfolge der Fahrhinweise von der Dienstezentrale an die Recheneinheit übertragen wird, wobei die Abfolge von Fahrhinweisen in der Recheneinheit gespeichert wird und wobei die Fahrhinweise entsprechend der Abfolge der Fahrhinweise nacheinander von der Recheneinheit ausgegeben werden.

Der Erfindung liegt die Aufgabe zugrunde, ein Navigationssystem zu entwickeln, welches durch eine zentrale Steuereinheit und ein mobiles Gerät gebildet ist, wobei die beiden Geräte hinsichtlich der Menge der zwischen den Geräten zu übertragenden Daten optimiert sein sollen und wobei mit dem durch die beiden elektronischen Geräte gebildeten Navigationssystem die Leistungsfähigkeit eines sogenannten fest eingebauten Navigationssystems erreicht werden soll. Diese Aufgabe wird bei einem Navigationssystem durch die Merkmale des Anspruchs 1 gelöst. In den abhängigen Ansprüchen sind vorteilhafte und zweckmäßige Weiterbildungen angegeben.

Das erfindungsgemäße Navigationssystem für ein Fahrzeug umfasst, einen mobilen Navigationsrechner, eine fahrzeugseitige zentrale Steuereinheit, einen GPS-Empfänger, eine Kommunikationsverbindung zwischen dem mobilen Navigationsrechner und der zentralen Steuereinheit, wobei Positionsdaten des Fahrzeugs in einer Navigationseinheit des mobilen Navigationsrechners zu für die Navigation relevanten Informationen (DM1) verarbeitbar sind, wobei im Verlauf der Navigation die relevanten Informationen (DM1) zu einem jeweils auszuführenden Manöver, von dem Navigationsrechner an die Steuereinheit Übertragbar sind und wobei diese Informationen über die zentrale Steuereinheit optisch und/oder akustisch ausgebbar sind. Vorteilhaft bei einem derartigen zweiteiligen Navigationssystem ist, dass der mobile Navigationsrechner, welcher auch eigenständig und selbständig für eine Navigation im Fahrzeug einsetzbar ist, in das Fahrzeug derart integriert wird, dass aus dem mobilen Navigationsrechner und der Steuereinheit ein Navigationssystem entsteht, bei welchem der mobile Navigationsrechner und die zentrale Steuereinheit mit ihren Komponenten ein hybrides Navigationssystem bilden. Dieses hybride Navigationssystem nutzt Komponenten beider Geräte und ist so hinsichtlich der Anforderungen an die Leistungsfähigkeit und/oder den Energieverbrauch des Navigationssystems optimiert. Das hybride Navigationssystem ist an die Anforderungen für eine fahrzeuggebundene Navigation optimal anpassbar, ohne dass eines der beiden Geräte hierfür sämtliche Komponenten zur Verfügung stellen muss. Kern der Erfindung ist somit ein hybrides Navigationssystem, bei welchem jedes Gerät vorzugsweise die Aufgaben übernimmt, für welche es besser geeignet ist, wobei der mobile Navigationsrechner insbesondere dafür vorgesehen ist im Verlauf der Navigation mit Hilfe seiner Navigationseinheit relevante Informationen zu bestimmen und zu einem jeweils auszuführenden Manöver an die zentrale Steuereinheit zu übertragen. Die zentrale Steuereinheit ist insbesondere dafür vorgesehen, diese relevanten Informationen optisch und/oder akustisch auszugeben. Bezüglich der weiteren Komponenten sieht die Erfindung vor, die entsprechend den Anforderungen jeweils geeignetere Komponente in das hybride Navigationssystem einzubinden oder diese als redundante Komponente für das hybride Navigationssystem bereit zu halten. Vorteilhaft bei einem derartigen zweiteiligen Navigationssystem ist somit, dass bei der fahrzeugseitigen zentralen Steuereinheit auf eine Navigationseinheit verzichtet werden kann und hierdurch der technische bzw. finanzielle Aufwand für die zentrale Steuereinheit entsprechend geringer ist. Somit führt ein bereits vorhandenes mobiles Gerät, dessen Prozessor mit einer entsprechenden Software als Navigationsrechner nutzbar ist, zu einer entsprechenden Einsparung bei der Anschaffung eines fahrzeugspezifischen Navigationssystems. Kern der Erfindung ist somit ein zweiteiliges Navigationssystem, welches auf Grund einer Aufteilung der für die Navigation erforderlichen Aufgaben wie Positionsdatenbestimmung, Routen- und Manöverberechnung und Ausgabe von Fahranweisungen effizient arbeitet. Hierbei wird die Ausgabe von Fahranweisungen in die fahrzeugseitige zentrale Steuereinheit verlagert und die Routen- und Manöverberechnung von dem mobilen Navigationsrechner vorgenommen.

Eine erste Ausführungsvariante der Erfindung sieht vor, die Positionsdaten des Fahrzeugs durch eine Positionsbestimmungseinheit des mobilen Navigationsrechners, insbesondere unter Verwendung des dem Navigationsrechner zugeordneten GPS-Empfängers und/oder wenigstens eines dem Navigationsrechner zugeordneten Sensors zu bestimmen, und in der Navigationseinheit des mobilen Navigationsrechners zu den für die Navigation relevanten Daten zu verarbeiten. Hierdurch kann bei der fahrzeugseitigen zentralen Steuereinheit vollständig auf einen GPS-Empfänger und eine Positionsbestimmungseinheit verzichtet werden. Hierdurch kann die fahrzeugseitige zentrale Steuereinheit besonders kostengünstig ausgebildet werden. Als "zugeordneter GPS-Empfänger" wird ein GPS-Empfänger bezeichnet, welcher in dem mobilen Navigationsrechner selbst angeordnet ist oder mit diesem drahtlos oder drahtgebunden in Verbindung steht.

Eine zweite Ausführungsvariante der Erfindung sieht vor, die Positionsdaten des Fahrzeugs durch die Positionsbestimmungseinheit der zentralen Steuereinheit, insbesondere unter Verwendung des der zentralen Steuereinheit zugeordneten GPS-Empfängers und/oder wenigstens eines der zentralen Steuereinheit zugeordneten Sensors zu bestimmen, und an den mobilen Navigationsrechner zu übertragen, wobei das Fahrzeug auf der Grundlage der aus den übertragenen Positionsdaten in der Navigationseinheit des mobilen Navigationsrechners für die Navigation errechneten relevanten Daten navigierbar ist. Durch eine derartige Aufgabenverteilung im hybriden Navigationssystem ist eine für den mobilen Navigationsrechner besonders energiesparende Ausführungsvariante gebildet, deren Vorteil sich insbesondere bei einem über eine Funkverbindung eingebundenen GPS-Empfänger zeigt. Als "zugeordneter GPS-Empfänger" wird ein GPS-Empfänger bezeichnet, welcher in der zentralen Steuereinheit selbst angeordnet ist oder mit dieser drahtlos oder drahtgebunden in Verbindung steht.

Eine dritte Ausführungsvariante entspricht der ersten Ausführungsvariante, wobei es ergänzend vorgesehen ist, dem mobilen Navigationsrechner Daten eines der zentralen Steuereinheit zugeordneten Sensors zur Verfügung zu stellen und hierdurch die Genauigkeit der von der Positionsbestimmungseinheit ausgegebenen Daten insbesondere für Tunnelfahrten und/oder Parkhausfahrten zu erhöhen.

Eine vierte Ausführungsvariante entspricht der zweiten Ausführungsvariante, wobei es ergänzend vorgesehen ist, der zentralen Steuereinheit Daten eines dem mobilen Navigationsrechner zugeordneten Sensors zur Verfügung zu stellen und hierdurch die Genauigkeit der von der Positionsbestimmungseinheit ausgegebenen Daten insbesondere für Tunnelfahrten und/oder Parkhausfahrten zu erhöhen.

Eine Ausführungsform der Erfindung sieht vor, den GPS-Empfänger für eine fahrzeugbezogene Navigation in der zentralen Steuereinheit anzuordnen. Hierdurch wird der Energieverbrauch im mobilen Navigationsrechner niedrig gehalten.

Eine weitere Ausführungsvariante der Erfindung sieht vor, den GPS-Empfänger für die fahrzeugbezogene Navigation als Bestandteil des Fahrzeugs unabhängig von dem Navigationsrechner und der zentralen Steuereinheit anzuordnen. Hierdurch kann für den GPS-Empfänger unabhängig von der Anordnung des Navigationsrechners und der Steuereinheit eine Position mit optimalem Empfang gewählt werden und der GPS-Empfänger ist von dem Navigationsrechner und/oder der zentralen Steuereinheit direkt nutzbar

Weiterhin sieht die Erfindung für die Navigation eine drahtlose Kommunikationsverbindung zwischen dem dem Fahrzeug zugeordneten GPS-Empfänger und der zentralen Steuereinheit oder der Navigationseinheit vor. Hierdurch ist die Installation besonders einfach, da keine Kabel zum GPS-Empfänger verlegt werden müssen.

Die Erfindung sieht auch vor, mit dem Navigationsrechner eine Navigation auch außerhalb des Fahrzeugs durchzuführen.
Hierdurch ist auch außerhalb des Fahrzeugs ein Navigationssystem verfügbar.

Erfindungsgemäß ist der Navigationsrechner als Mobiltelefon oder mobiles Navigationssystem oder Laptop oder PDA oder Halteschale für ein Mobiltelefon ausgebildet. Die Verwendbarkeit derartig unterschiedlicher Geräte als Navigationsrechner macht die einfache Ausgestaltung der Steuereinheit für eine große Zielgruppe interessant.

Weiterhin sieht die Erfindung eine Versorgung des mobilen Navigationsrechners durch eine Servicezentrale mit Daten für eine Routenführung vor. Hierdurch kann unabhängig von der Rechenleistung des Navigationsrechners eine rasche Routenberechnung erfolgen.

Die Erfindung sieht auch eine Versorgung des mobilen Navigationsrechners durch eine Servicezentrale mit Daten für eine Kartendarstellung vor. Hierdurch kann die Aktualität des Datenbestandes gewährleistet werden, ohne dass der Nutzer hierzu ein Update aufspielen muss.

Erfindungsgemäß ist eine Errechnung der Positionsdaten des Fahrzeugs durch die Positionsbestimmungseinheit der zentralen Steuereinheit unter Verwendung von Daten des GPS-Empfängers und/oder von Daten eines Drehwinkelgebers und/oder von Geschwindigkeitsimpulsen eines Geschwindigkeitsimpulsgebers vorgesehen. Durch die Verwendung von zusätzlichen Daten des Drehwinkelgebers und/oder des Geschwindigkeitsimpulsgebers lässt sich die aktuelle Position des Fahrzeugs auch in einem Tunnel, in einer Unterführung, in einer Tiefgarage oder in sonstigen von Satellitensignalen abgeschirmten Bereichen genau bestimmen. Durch die Verwendung derartiger zusätzlicher Informationen erreicht das erfindungsgemäße zweiteilige Navigationssystem bezüglich der Bestimmung der aktuellen Position eine Genauigkeit, welche mit hochwertigen, fest eingebauten Navigationssystemen vergleichbar ist.

Weiterhin sieht die Erfindung vor, die Positionsdaten oder auch nur für die Positionsberechnung ergänzende fahrzeugtypische Daten wie z.B. Geschwindigkeitsimpuls oder Lenkwinkel von der zentralen Steuereinheit für den mobilen Navigationsrechner und die relevanten Informationen von dem mobilen Navigationsrechner für die zentrale Steuereinheit über die selbe Kommunikationsverbindung zu übertragen. Hierdurch kann der technische Aufwand für die Datenübertragung niedrig gehalten werden.

Eine Ausführungsvariante der Erfindung sieht vor, die Positionsdaten von der zentralen Steuereinheit für den mobilen Navigationsrechner und die relevanten Informationen von dem mobilen Navigationsrechner für die zentrale Steuereinheit über unterschiedliche Kommunikationsverbindungen zu übertragen. Hierdurch können sämtliche Daten ohne Verzögerung übertragen werden.

Weiterhin sieht die Erfindung vor, die relevanten Informationen über die zentrale Steuereinheit zu von der zentralen Steuereinheit bestimmbaren Zeitpunkten auszugeben. Auf diese Weise wird die Ausgabe der relevanten Informationen wie zum Beispiel die Ausgabe von Manövrierpunkten unabhängig auf der Basis der von der zentralen Steuereinheit ermittelten Positionsdaten und unabhängig vom mobilen Navigationsrechner durchgeführt. Somit wird weiterer Datenverkehr zwischen der zentralen Steuereinheit und dem mobilen Navigationsrechner wirksam vermieden.

Insbesondere ist es vorgesehen, die relevanten Informationen über die zentrale Steuereinheit beim Erreichen von von der zentralen Steuereinheit bestimmbaren Wegpunkten auszugeben. Somit ist die zentrale Steuereinheit bei der Durchführung eines Manövers unabhängig von dem mobilen Navigationsrechner.

Erfindungsgemäß ist es weiterhin vorgesehen, die relevanten Informationen über die zentrale Steuereinheit grafisch auf einem Display und/oder akustisch auf wenigstens einem Lautsprecher auszugeben. Hierdurch ist eine umfangreiche Information des Nutzers möglich.

Weiterhin sieht die Erfindung vor, codierte und/oder komprimierte relevante Informationen des Navigationsrechners in der zentralen Steuereinheit zu decodieren und/oder zu dekomprimieren. Bei der Übermittlung derartiger Informationen kann auf einen Audiokanal verzichtet werden und das Datenaufkommen ist gering. Hierdurch kann insbesondere der Energieverbrauch des mobilen Navigationsrechners gesenkt werden, so dass dieser bedenkenlos ausschließlich mit Batterien oder Akkumulatoren betrieben werden kann.

Die Erfindung sieht vor, die von der zentralen Steuereinheit decodierten und/oder dekomprimierten relevanten Informationen des Navigationsrechners zeit- und oder positionsabhängig zu wenigstens einem Kommando zu kombinieren. Derartige Kommandos lassen sich mit geringer Rechenleistung und damit auch energiesparend erzeugen.

Weiterhin sieht die Erfindung eine Eingabe des Navigationsziels für die Routenführung an der zentralen Steuereinheit vor, wobei das Navigationsziel an den mobilen Navigationsrechner übertragbar ist und wobei die erforderliche Routenberechnung durch den mobilen Navigationsrechner durchführbar ist. Insbesondere ist es vorgesehen, das Navigationsziel über das Display der zentralen Steuereinheit und/oder über ein Mikrofon durch Sprachbefehle und/oder über wenigstens ein Stellorgan zu erfassen. Hierdurch ist eine bequeme Eingabe möglich, welche unabhängig von dem Navigationsrechner erfolgt.

Die Erfindung sieht auch vor, ein in dem Navigationsrechner gespeichertes Telefonbuch auf die zentrale Steuereinheit zu übertragen, wobei auf der Grundlage des Telefonbuchs ein Navigationsziel über die zentrale Steuereinheit anwählbar ist, wobei eine Vervollständigung des Navigationsziels anhand eines in dem Navigationsrechner vorhandenen Adressbuches durchführbar ist. Durch den Zugriff auf die persönlichen Einträge in den Navigationsrechner ist eine einfache Zieleingabe möglich, da in der Regel zu fast jedem Ziel bereits ein Eintrag im Telefonbuch und Adressbuch vorliegt.

Eine Ausführungsvariante sieht vor, ein in dem Navigationsrechner gespeichertes Adressbuch auf die zentrale Steuereinheit zu übertragen und auf dessen Grundlage ein Navigationsziel über die zentrale Steuereinheit anzuwählen. Hierdurch werden noch kürzere Reaktionszeiten erzielt, da sämtliche Adressdaten schon in der zentralen Steuereinheit verfügbar sind.

Insbesondere sieht die Erfindung auch eine automatische Abfrage einer Servicezentrale durch den Navigationsrechner vor, wenn das Navigationsziel eingegeben ist. Hierdurch ist für den Nutzer kein Unterschied zwischen einer auf dem Navigationsrechner durchgeführten Routenberechnung und einer von der Servicezentrale durchgeführten Routenberechnung erkennbar.

Weiterhin sieht die Erfindung vor, das Navigationssystem bei Verwendung eines Mobiltelefons als Navigationsrechner als Freisprecheinrichtung für das Mobiltelefon zu verwenden. Bei einer derartigen Ausbildung des Navigationssystems lassen sich ein Display, ein Mikrofon und ein Lautsprecher sowohl für den Betrieb des Navigationssystems als auch für die Telefon- bzw. Freisprechfunktionen des als Navigationsrechner dienenden Mobiltelefons verwenden.

Weiterhin sieht die Erfindung vor Daten wenigstens eines im Fahrzeug angeordneten Sensors, wie insbesondere Drehwinkelgeber oder Geschwindigkeitsimpulsgeber, in der Positionsbestimmungseinheit der Steuereinheit zu erdgestützten Positionsdaten zu verarbeitet und/oder Daten des der zentralen Steuereinheit zugeordneten GPS-Empfängers zu satellitengestützten Positionsdaten zu verarbeitet und die hieraus ermittelte Koordinaten über die Sende- und Empfangseinheit an die Navigationseinheit des Navigationsrechners zu übermitteln.
Die Erfindung sieht vor, von der Steuereinheit detaillierte Karteninformationen zu einem zu durchfahrenden Korridor gemeinsam mit für die Routenführung relevanten Informationen empfangbar sind und diese detaillierten Informationen in der Steuereinheit zur Darstellung einer Karte und zur Ausgabe relevanter Informationen an definierten Wegpunkten nutzbar sind, wobei die Darstellung und die Ausgabe auf der Basis von von der Steuereinheit vorgenommenen Positionsberechnungen erfolgt. Hierdurch können die Karteninformationen und die für die Routenführung relevanten Informationen, wie Abbiegehinweise, Spurwechselhinweise usw., unabhängig von dem tatsächlichen Zeitpunkt, zu welchem diese benötigt werden, übertragen werden. Eine verzögerte Darstellung bzw. Ausgabe kann so wirksam verhindert werden.

Die erfindungsgemäße Steuereinheit zur Bildung eines Navigationssystems für ein Fahrzeug, sieht die Bestimmung von Positionsdaten des Fahrzeugs vor, wobei die Positionsdaten von der Steuereinheit an einen Navigationsrechner übermittelbar sind, wobei von der Steuereinheit relevante Informationen zu wenigstens einem Manöver empfangbar und speicherbar sind und wobei die relevanten Informationen von der Steuereinheit an definierten Wegpunkten auf der Basis einer von der Steuereinheit vorgenommenen Positionsberechnung oder einer von einem mobilen Navigationsrechner vorgenommenen Positionsberechnung ausgebbar sind. Eine derartige Steuereinheit stellt dem Nutzer durch eine Kommunikation mit einem in dem Fahrzeug befindlichen mobilen Gerät, das als Navigationsrechner ausgebildet ist, eine vollwertige Navigation zur Verfügung, ohne selbst über alle notwendigen Komponenten verfügen zu müssen.

Unter relevanten Informationen des Navigationsrechners sind im Sinne der Erfindung Angaben zu Manövern wie zum Beispiel Richtungsänderungen und Spurwechsel und mit diesen Manövern in Verbindung stehende Informationen wie zum Beispiel Distanzangaben und Straßennamen zu verstehen, aber auch Informationen zur Höchstgeschwindigkeit auf der aktuellen Strecke, Baustellen- und Verkehrsinformationen, welche für den Fahrer relevant sind. Unter dem Begriff relevante Informationen sind im Sinne der Erfindung aber auch Informationen zu verstehen, welche für Beifahrer relevant sind wie z.B. landeskundliche Informationen.

Ein Übertragungsweg ist im Sinne der Erfindung eine drahtlose oder drahtgebundene Kommunikationsverbindung, wobei eine drahtlose Kommunikationsverbindung jeweils einen Funkstandard nutzt. Bei dem Funkstandard handelt es sich beispielsweise um den Standard Bluetooth oder den Standard WiFi entsprechend IEEE 802.11 oder um ähnliche für eine Datenübertragung im Nahbereich geeignete Übertragungsverfahren.

Unter einem Telefonbuch ist im Sinne der Erfindung eine Datei zu verstehen, in welcher in einer elektronischen Tabelle eine Zuordnung von Kommunikationsadressen wie zum Beispiel Telefonnummern oder Emailadressen zu Namen vorliegt. Unter einem Adressbuch ist im Sinne der Erfindung eine Datei zu verstehen, in welcher in einer elektronischen Tabelle eine Zuordnung von geografischen Daten zum Beispiel in Form von Koordinaten oder Ländernamen, Städtenamen, Straßennamen und Hausnummer zu Namen vorliegt. Ein Adressbuch kann auch Kommunikationsadressen umfassen. Somit stellt ein Telefonbuch ggf. eine Teilmenge eines Adressbuches dar.

Unter einer fahrzeugbezogenen Navigation ist im Sinne der Erfindung eine Navigation zu verstehen, welche in einem Fahrzeug erfolgt, wobei eine zentrale Steuereinheit und ein mobiler Navigationsrechner zusammenarbeiten. Unter einer mobilen Navigation ist im Sinne der Erfindung eine Navigation zu verstehen, welche außerhalb eines Fahrzeugs erfolgt und allein mit dem mobilen Navigationsrechner durchführbar ist. Weiterhin wird unter einer Onboardnavigation eine Navigation verstanden, bei welcher die Routenberechnung in dem Navigationsgerät z.B. in dem mobilen Navigationsrechner selbst erfolgt. Im Unterschied hierzu wird unter einer Offboardnavigation eine Navigation verstanden, bei welcher die Routenberechnung auf einem Server erfolgt, welcher die errechneten Daten dann drahtlos an das Navigationsgerät z.B. den mobilen Navigationsrechen übermittelt.

Als Komponenten des mobilen Navigationsrechners bzw. der zentralen Steuereinheit werden deren elektronische Bauteile wie zum Beispiel Sende- und Empfangseinheit, Positionsbestimmungseinheit, Navigationsmodul usw. bezeichnet.

Weitere Einzelheiten der Erfindung werden in der Zeichnung anhand von schematisch dargestellten Ausführungsbeispielen beschrieben.

Hierbei zeigt:
Figur 1: eine schematische Darstellung eines erfindungsgemäßen Navigationssystems in einem Fahrzeug,
Figur 2: eine schematische Darstellung von Inhalten des Displays der zentralen Steuereinheit an unterschiedlichen Wegpunkten während des Manövers M1,
Figur 3: eine schematische Darstellung eines zweiten erfindungsgemäßen Navigationssystems,
Figur 4: eine schematische Darstellung eines weiteren erfindungsgemäßen Navigationssystems in einem Fahrzeug und
Figur 5: eine schematische Darstellung eines weiteren erfindungsgemäßen Navigationssystems in einem Fahrzeug.

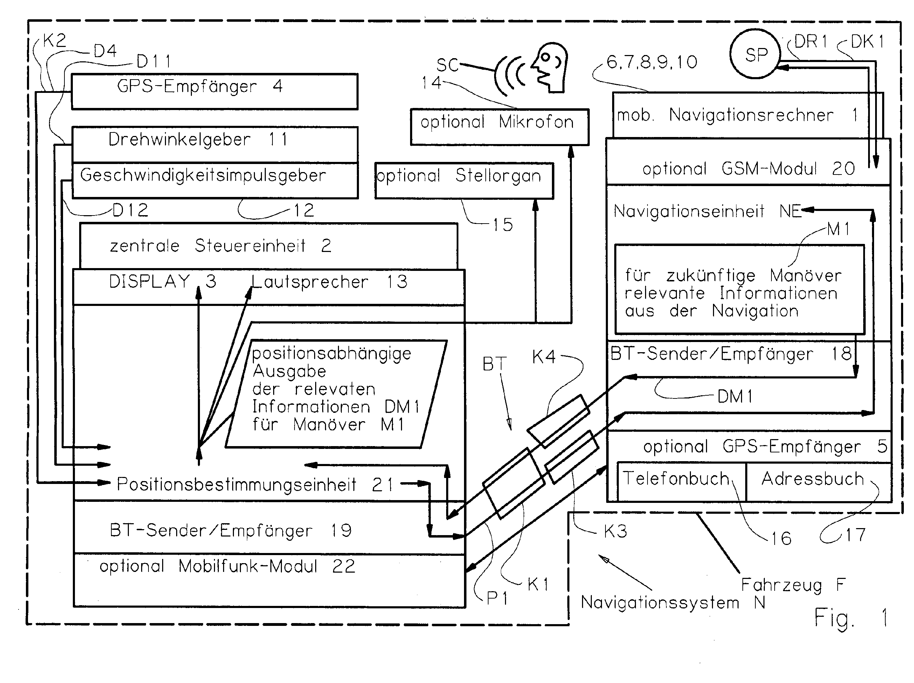

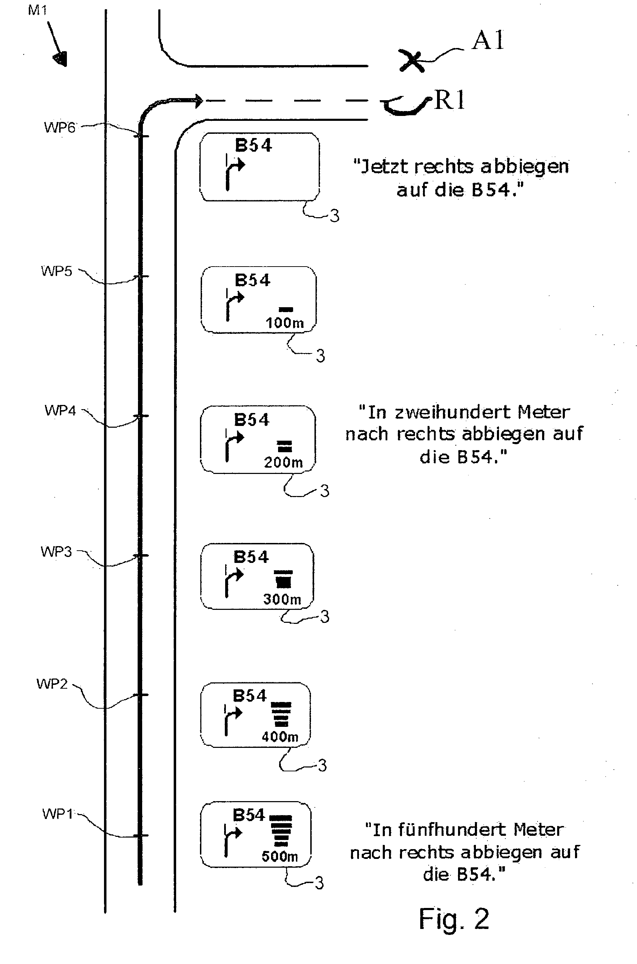

In der Figur 1 ist ein erfindungsgemäßes Navigationssystem N schematisch dargestellt. Das Navigationssystem N ist für ein Fahrzeug F vorgesehen und umfasst einen mobilen Navigationsrechner 1, eine fahrzeugseitige zentrale Steuereinheit 2, einen GPS-Empfänger 4 und eine Kommunikationsverbindung K1 zwischen dem mobilen Navigationsrechner 1 und der zentralen Steuereinheit 2. Mit dem Navigationssystem N sind Positionsdaten P1 des Fahrzeugs F durch die zentrale Steuereinheit 2 erfassbar und an den mobilen Navigationsrechner 1 übertragbar. Auf der Grundlage der übertragen Positionsdaten P1 ist das Fahrzeug F durch den Navigationsrechner 1 navigierbar. Im Verlauf der Navigation sind relevante Informationen DM1 zu einem jeweils auszuführenden Manöver M1 (siehe auch Figur 2), von dem Navigationsrechner 1 an die Steuereinheit 2 übertragbar. Diese Informationen DM1 sind über die zentrale Steuereinheit 2 optisch und/oder akustisch für einen Benutzer des Fahrzeugs F ausgebbar. Der mobile Navigationsrechner 1 ist erfindungsgemäß zum Beispiel als Mobiltelefon 6, als mobiles bzw. portables Navigationssystem 7, als Laptop 8, als Personal Digital Assistent 9 oder als Halteschale 10 für ein Mobiltelefon ausgebildet. Der Navigationsrechner 1 umfasst wenigstens eine Navigationseinheit NE und eine Sende- und Empfangseinheit 18, mittels welcher der Navigationsrechner 1 mit der zentralen Steuereinheit 2 kommunizieren kann, wobei die Steuereinheit 2 ebenfalls eine Sende- und Empfangseinheit 19 aufweist. Der Navigationsrechner 1 umfasst optional zum Beispiel noch Komponenten wie einen internen GPS-Empfänger 5, ein GSM-Modul 20, ein Telefonbuch 16 und/oder ein Adressbuch 17. Der interne GPS-Empfänger 5 ist für eine sogenannte mobile Navigation vorgesehen, bei welcher der mobile Navigationsrechner 1 außerhalb des Fahrzeugs F ein eigenständiges Navigationssystem bildet. Sofern der Navigationsrechner 1 in das erfindungsgemäße Navigationssystem N eingebunden ist, navigiert die Navigationseinheit NE des Navigationsrechners 1 auf der Grundlage von dauerhaft und/oder vorübergehend in dem Navigationsrechner 1 gespeichertem Kartenmaterial mit Positionsdaten P1. Die Positionsdaten P1 können in der zentralen Steuereinheit 2 bestimmt und an den mobilen Navigationsrechner 1 übertragen werden. Zur Bestimmung der Positionsdaten P1 umfasst die zentrale Steuereinheit 2 eine Positionsbestimmungseinheit 21, welche Daten eines GPS-Empfängers 4 und/oder eines Drehwinkelgebers 11 und/oder eines Geschwindigkeitsimpulsgebers 12 verarbeitet. Von der Positionsbestimmungseinheit 21 ermittelte Koordinaten werden über die Sende- und Empfangseinheit 19 an die Navigationseinheit NE des Navigationsrechners 1 übermittelt. Die zentrale Steuereinheit 2 umfasst ein Display 3 und einen Lautsprecher 13 zur optischen und akustischen Ausgabe von Informationen zu der Navigationsstrecke und insbesondere zur positionsabhängigen Ausgabe der relevanten Informationen DM1 für das auszuführende Manöver M1 zum Beispiel das Abbiegen an einer Kreuzung. Das Display 3 kann auch durch ein im Fahrzeug für andere Zwecke nutzbares Display gebildet sein. Ebenso kann der Lautsprecher 13 ein in dem Fahrzeug F für andere Zwecke nutzbarer Lautsprecher sein. Optional ist es vorgesehen, die zentrale Steuereinheit 2 mit einem Mobilfunkmodul 22 und/oder einer Freisprecheinrichtung 23 auszustatten. Zur Entgegennahme von Sprachbefehlen SC und/oder zur Verwirklichung einer Freisprechfunktion ist für die zentrale Steuereinheit 2 ein Mikrofon 14 vorgesehen. Der GPS-Empfänger 4, welcher Daten D4 über eine zweite Kommunikationsverbindung K2 an die Positionsbestimmungseinheit 21 übermittelt, ist im Fahrzeug F an einer Stelle angeordnet, welche einen optimalen Empfang von Satellitensignalen erlaubt. Bei einem Ausfall des im Fahrzeug F angeordneten GPS-Empfängers 4 kann auch der ggf. in dem mobilen Navigationsrechner 1 vorhandene GPS-Empfänger 5 von der Positionsbestimmungseinheit 21 genutzt werden. Als Ausführungsvariante sind in der Figur 1 alternativ zu der Kommunikationsverbindung K1 zwei unterschiedliche Kommunikationsverbindungen K3 und K4 dargestellt. Hierbei ist die Kommunikationsverbindung K3 für die Übermittlung der Positionsdaten P1 von der Positionsbestimmungseinheit 21 an die Navigationseinheit NE zuständig. Über die Kommunikationsverbindung K4 werden die relevanten Informationen DM1 von der Navigationseinheit NE an die Positionsbestimmungseinheit 21 übermittelt. Diese sorgt dann abhängig von der aktuellen Position für eine Ausgabe der relevanten Informationen auf dem Display 3 und/oder über den Lautsprecher 13. Gemäß einer Ausführungsvariante ist es auch vorgesehen Daten für eine Kartendarstellung DK1 und/oder Daten für eine Routenführung DR1 über eine Mobilfunkverbindung von einer Servicezentrale zu laden. Hierdurch benötigt der mobile Navigationsrechner 1 im Vergleich zu einer Lösung, bei welcher die Routenberechnung auf dem Navigationsrechner erfolgt, eine geringere Rechenleistung und einen kleineren Speicher. Eine Eingabe eines Navigationsziels A1 kann an der zentralen Steuereinheit 2 über das Mikrofon 14 und/oder das als Touchscreen ausgebildete Display 3 und/oder ein beispielsweise als Multifunktions-Drehknopf ausgebildetes Stellorgan 15 erfolgen.

Die Figur 2 zeigt eine schematische Darstellung von Inhalten des Displays 3 der zentralen Steuereinheit 2 an unterschiedlichen Wegpunkten WP1 bis WP6 während des Manövers M1. Vor dem Erreichen des Wegpunktes WP1, welcher auf der von der Navigationseinheit NE errechten Route liegt, übermittelt die Navigationseinheit NE die relevanten Informationen DM1 zu dem Manöver M1 über die Kommunikationsverbindung K1 an die Positionsbestimmungseinheit 21 der zentralen Steuereinheit 2. Sobald die Positionsbestimmungseinheit 21 feststellt, dass der Wegpunkt WP1 erreicht ist, wird auf dem Display 3 angezeigt, dass in 500m nach rechts auf die B54 abgebogen werden muss. Gleichzeitig erfolgt über den Lautsprecher 13 (siehe Figur 1) eine Sprachmitteilung "In fünfhundert Metern nach rechts abbiegen auf die B54". An den folgenden Wegpunkten WP2 bis WP6 wird der Displayinhalt jeweils aktualisiert, wobei an den Wegpunkten WP4 und WP6 jeweils nochmals eine Sprachmitteilung erfolgt. Das Manöver M1 läuft somit bezüglich der Ausgabe der einzelnen Displayinhalte und bezüglich der Sprachmitteilungen unabhängig von dem Navigationsrechner 1 ab. Es werden lediglich von dem Navigationsrechner 1 im Vorfeld des Manövers M1 generierte Informationen DM1, welche Koordinaten bzw. Wegpunkten zugeordnet sind, an die zentrale Steuereinheit 2 übergeben und von dieser in Abhängigkeit von dem Erreichen der Koordinaten bzw. Wegpunkte WP1 bis WP6 ausgegeben. Sofern das Fahrzeug einen Wegpunkt, an welchem eine Information ausgegeben werden soll, nicht erreicht, weil es z.B. zuvor abgebogen ist, wird die diesem Wegpunkt zugeordnete Information von der zentralen Steuereinheit 2 auch nicht ausgegeben. Zur Ausgabe der Sprachmitteilungen kann zum Beispiel ein Sprachgenerator verwendet werden. Somit ist es nicht erforderlich, dass der Navigationsrechner 1 vergleichsweise große Audiodateien generiert oder überträgt. Das Manöver M1 ist Bestandteil einer Routenführung R1 zu einem Navigationsziel A1. Zur Erleichterung der Eingabe des Navigationsziels A1 ist eine Nutzung des Telefonbuchs 16 und/oder des Adressbuchs 17 durch die Steuereinheit vorgesehen.

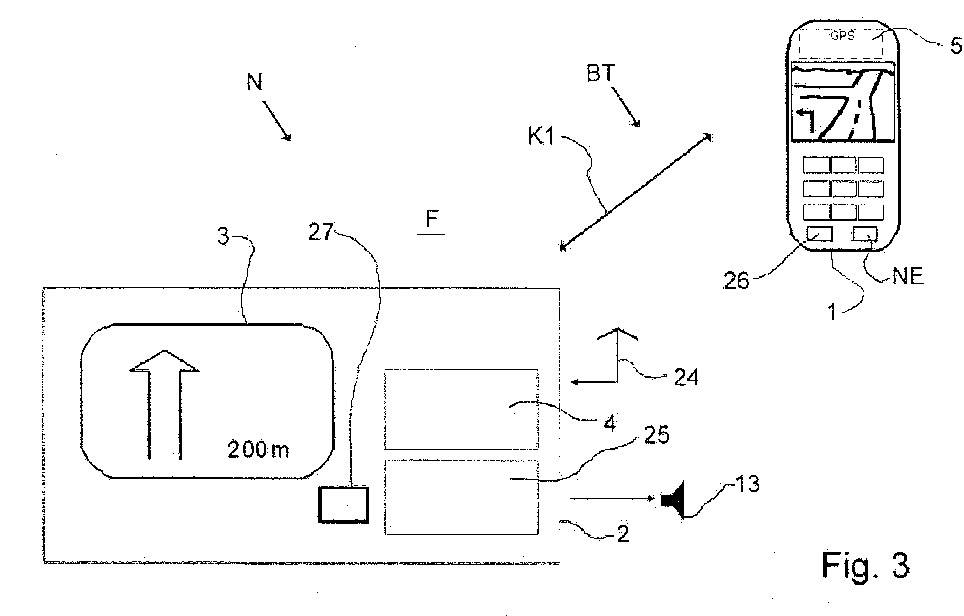

Die Figur 3 zeigt schließlich eine schematische Darstellung eines zweiten erfindungsgemäßen Navigationssystems N. Bei diesem Navigationssystem N wird als Navigationsrechner 1 ein Mobiltelefon 6 verwendet. Dieses steht über eine Kommunikationsverbindung K1, welche als Bluetooth-Verbindung BT ausgebildet ist, in Verbindung mit einer zentralen Steuereinheit 2, welche in ein Fahrzeug F eingebaut ist. Die zentrale Steuereinheit 2 umfasst einen in diese eingebauten GPS-Empfänger 4, welcher an eine GPS-Antenne angeschlossen ist. Neben einem Display 3 umfasst die zentrale Steuereinheit 2 noch einen Audioverstärker 25, in welchem in der Steuereinheit 2 durch einen Sprachgenerator 27 generierte Audiosignale für einen Lautsprecher 13 verstärkt werden. Das Mobiltelefon 6 verfügt über einen weiteren GPS-Empfänger 5 und eine Navigationseinheit NE. Sofern das Mobiltelefon 6 bzw. der Navigationsrechner 1 mit der zentralen Steuereinheit 2 in Kommunikationsverbindung steht und der GPS-Empfänger 4 der zentralen Steuereinheit 2 funktioniert, bleibt der GPS-Empfänger 5 des Mobiltelefons 6 abgeschaltet um einen Energiespeicher 26 des Mobiltelefons 6 nicht zu belasten.

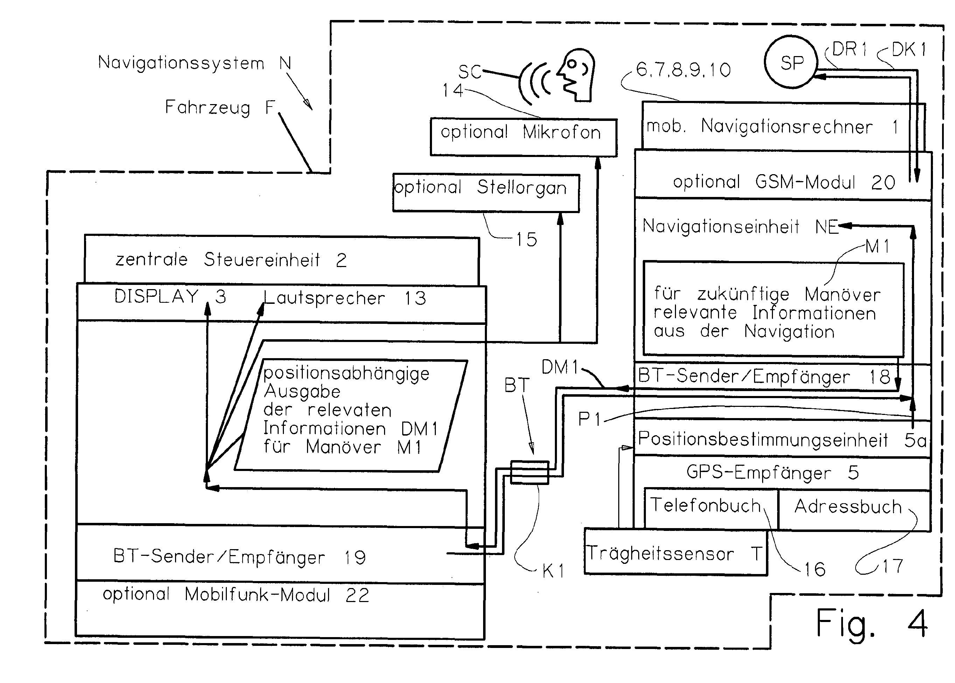

In der Figur 4 ist ein weiteres erfindungsgemäßes Navigationssystem N schematisch dargestellt. Das Navigationssystem N ist für ein Fahrzeug F vorgesehen und umfasst einen mobilen Navigationsrechner 1, eine fahrzeugseitige zentrale Steuereinheit 2 und eine Kommunikationsverbindung K1 zwischen dem mobilen Navigationsrechner 1 und der zentralen Steuereinheit 2. Im Verlauf der Navigation sind relevante Informationen DM1 zu einem jeweils auszuführenden Manöver M1 (siehe auch Figur 2), von dem Navigationsrechner 1 an die Steuereinheit 2 übertragbar. Diese Informationen DM1 sind über die zentrale Steuereinheit 2 optisch und/oder akustisch für einen Benutzer des Fahrzeugs F ausgebbar. Der mobile Navigationsrechner 1 ist erfindungsgemäß zum Beispiel als Mobiltelefon 6, als mobiles bzw. portables Navigationssystem 7, als Laptop 8, als Personal Digital Assistent 9 oder als Halteschale 10 für ein Mobiltelefon ausgebildet. Der Navigationsrechner 1 umfasst eine Navigationseinheit NE und eine Sende- und Empfangseinheit 18, mittels welcher der Navigationsrechner 1 mit der zentralen Steuereinheit 2 kommunizieren kann, wobei die Steuereinheit 2 ebenfalls eine Sende- und Empfangseinheit 19 aufweist. Der Navigationsrechner 1 umfasst weiterhin einen GPS-Empfänger 5 und optional ein GSM-Modul 20, ein Telefonbuch 16 und/oder ein Adressbuch 17. Sofern der GPS-Empfänger 5 als interner, in dem Navigationsgerät 1 angeordneter GPS-Empfänger 5 ausgebildet ist, ist auch eine sogenannte mobile Navigation möglich, bei welcher der mobile Navigationsrechner 1 außerhalb des Fahrzeugs F ein eigenständiges Navigationssystem bildet, das nach Art einer Offboardnavigation oder Onboardnavigation betreibbar ist. Sofern der Navigationsrechner 1 in das erfindungsgemäße Navigationssystem N eingebunden ist, navigiert die Navigationseinheit NE des Navigationsrechners 1 auf der Grundlage von dauerhaft und/oder vorübergehend in dem Navigationsrechner 1 gespeichertem Kartenmaterial mit Positionsdaten P1. Die Positionsdaten P1 werden in dem mobilen Navigationsrechner 1 bestimmt. Zur Bestimmung der Positionsdaten P1 umfasst der mobile Navigationsrechner eine Positionsbestimmungseinheit 5a, welche Daten des GPS-Empfängers 5 und optional Daten eines Trägheitssensors T verarbeitet. Von der Positionsbestimmungseinheit 5a ermittelte Koordinaten werden an die Navigationseinheit NE des Navigationsrechners 1 übergeben. Die zentrale Steuereinheit 2 umfasst ein Display 3 und einen Lautsprecher 13 zur optischen und akustischen Ausgabe von Informationen zu der Navigationsstrecke und insbesondere zur positionsabhängigen Ausgabe der relevanten Informationen DM1 für das auszuführende Manöver M1 zum Beispiel das Abbiegen an einer Kreuzung. Das Display 3 kann auch durch ein im Fahrzeug F für andere Zwecke nutzbares Display gebildet sein. Ebenso kann der Lautsprecher 13 ein in dem Fahrzeug F für andere Zwecke nutzbarer Lautsprecher sein. Optional ist es vorgesehen, die zentrale Steuereinheit 2 mit einem Mobilfunkmodul 22 und/oder einer Freisprecheinrichtung 23 auszustatten. Zur Entgegennahme von Sprachbefehlen SC und/oder zur Verwirklichung einer Freisprechfunktion ist für die zentrale Steuereinheit 2 ein Mikrofon 14 vorgesehen. Gemäß einer Ausführungsvariante ist es auch vorgesehen, Daten für eine Kartendarstellung DK1 und/oder Daten für eine Routenführung DR1 über eine Mobilfunkverbindung von einer Servicezentrale SP zu laden. Hierdurch benötigt der mobile Navigationsrechner 1 im Vergleich zu einer Lösung, bei welcher die Routenberechnung auf dem Navigationsrechner 1 erfolgt, eine geringere Rechenleistung und einen kleineren Speicher. Eine Eingabe eines Navigationsziels kann an der zentralen Steuereinheit 2 über das Mikrofon 14 und/oder das als Touchscreen ausgebildete Display 3 und/oder ein beispielsweise als Multifunktions-Drehknopf ausgebildetes Stellorgan 15 erfolgen.

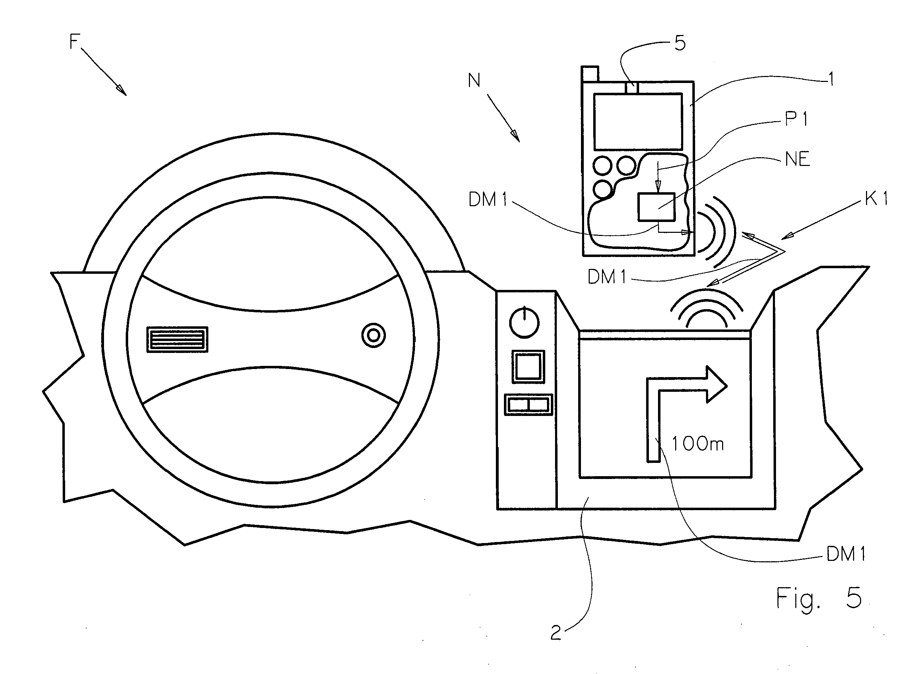

In der Figur 5 ist ein weiteres erfindungsgemäßes Navigationssystem N für ein Fahrzeug F schematisch dargestellt. Das Navigationssystem N umfasst einen mobilen Navigationsrechner 1, eine fahrzeugseitige zentrale Steuereinheit 2, einen GPS-Empfänger 5, eine Kommunikationsverbindung K1 zwischen dem mobilen Navigationsrechner 1 und der zentralen Steuereinheit 2, wobei Positionsdaten P1 des Fahrzeugs F in einer Navigationseinheit NE des mobilen Navigationsrechners 1 zu für die Navigation relevanten Informationen DM1 verarbeitbar sind, wobei im Verlauf der Navigation die relevanten Informationen DM1 zu einem jeweils auszuführenden Manöver, von dem Navigationsrechner 1 an die Steuereinheit 2 übertragbar sind und wobei diese Informationen DM1 über die zentrale Steuereinheit 2 optisch und/oder akustisch ausgebbar sind.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche. Insbesondere sieht die Erfindung vor, das erfindungsgemäße Navigationssystem entsprechend einer oder mehrerer der nachfolgend dargelegten Ausführungsformen zu ergänzen. Nach einer ersten Ausführungsform sieht die Erfindung vor, fahrzeugspezifische Daten D11, D12 durch die zentrale Steuereinheit 2 an den Navigationsrechner 1 zu übertragen und im mobilen Navigationsrechner 1 zur Verbesserung und Ergänzung der Positionsbestimmung zu verwenden. Nach einer zweiten Ausführungsform sieht die Erfindung vor, die Positionsdaten P1 von der zentralen Steuereinheit 2 für den mobilen Navigationsrechner 1 und die relevanten Informationen DM1 von dem mobilen Navigationsrechner 1 für die zentrale Steuereinheit 2 über dieselbe Kommunikationsverbindung K1 zu übertragen. Nach einer dritten Ausführungsform sieht die Erfindung vor, die Positionsdaten P1 von der zentralen Steuereinheit 2 für den mobilen Navigationsrechner 1 und die relevanten Informationen DM1 von dem mobilen Navigationsrechner 1 für die zentrale Steuereinheit 2 über unterschiedliche Kommunikationsverbindungen K3, K4 zu übertragen. Nach einer vierten Ausführungsform sieht die Erfindung vor, die relevanten Informationen DM1 über die zentrale Steuereinheit 2 zu von der zentralen Steuereinheit 2 bestimmbaren Zeitpunkten T1 auszugeben. Nach einer fünften Ausführungsform sieht die Erfindung vor, die relevanten Informationen DM1 über die zentrale Steuereinheit 2 beim Erreichen von von der zentralen Steuereinheit 2 bestimmbaren Wegpunkte WP1 auszugeben. Nach einer sechsten Ausführungsform sieht die Erfindung vor, die relevanten Informationen DM1 grafisch auf einem Display 3 und/oder akustisch auf wenigstens einem Lautsprecher 13 auszugeben. Nach einer siebten Ausführungsform sieht die Erfindung vor, codierte und/oder komprimierte relevante Informationen DM1 des Navigationsrechners 1 in der zentralen Steuereinheit 2 zu decodieren und/oder zu dekomprimieren. Nach einer achten Ausführungsform sieht die Erfindung vor, von der zentralen Steuereinheit 2 decodierte und/oder dekomprimierte relevante Informationen DM1 des Navigationsrechners 1 zeit- und oder positionsabhängig zu wenigstens einem Kommando B1 zu kombinieren. Nach einer neunten Ausführungsform sieht die Erfindung vor, das Navigationsziel A1 für die Routenführung R1 an der zentralen Steuereinheit 2 einzugeben, wobei das Navigationsziel A1 an den mobilen Navigationsrechner 1 übertragbar ist und wobei die erforderliche Routenberechnung durch den mobilen Navigationsrechner 1 durchführbar ist. Nach einer zehnten Ausführungsform sieht die Erfindung vor, das Navigationsziel A1 über das Display 3 der zentralen Steuereinheit 2 zu erfassen. Nach einer elften Ausführungsform sieht die Erfindung vor, die zentrale Steuereinheit 2 mit einem Mikrofon 14 auszustatten, über welches durch Sprachbefehle SC ein Navigationsziel A1 definierbar ist. Nach einer zwölften Ausführungsform sieht die Erfindung vor, die zentrale Steuereinheit 2 mit wenigstens einem Stellorgan 15 auszustatten durch dessen Betätigung ein Navigationsziel A1 definierbar ist. Nach einer dreizehnten Ausführungsform sieht die Erfindung vor, ein in dem Navigationsrechner 1 gespeichertes Telefonbuch 16 auf die zentrale Steuereinheit 2 zu übertragen und auf dessen Grundlage ein Navigationsziel A1 über die zentrale Steuereinheit 2 anzuwählen, wobei eine Vervollständigung des Navigationsziels A1 insbesondere anhand eines in dem Navigationsrechner 1 vorhandenen Adressbuches 17 durchführbar ist. Nach einer vierzehnten Ausführungsform sieht die Erfindung vor, ein in dem Navigationsrechner 1 gespeichertes Adressbuch 17 auf die zentrale Steuereinheit 2 zu übertragen und auf dessen Grundlage ein Navigationsziel A1 über die zentrale Steuereinheit 2 anzuwählen. Nach einer fünfzehnten Ausführungsform sieht die Erfindung vor, nach der Eingabe des Navigationsziels A1 automatisch eine Abfrage einer Servicezentral SP durch den Navigationsrechner 1 zu starten. Nach einer sechzehnten Ausführungsform sieht die Erfindung vor, das Navigationssystem N bei Verwendung eines Mobiltelefons als Navigationsrechner 1 als Freisprecheinrichtung für das Mobiltelefon zu verwenden.

### Bezugszeichenliste:

- 1: Navigationsrechner
- 2: fahrzeugseitige zentrale Steuereinheit
- 3: Display von 2
- 4: GPS-Empfänger in F
- 5: weiterer GPS-Empfänger in 1
- 6: Mobiltelefon
- 7: mobiles Navigationssystem
- 8: Laptop
- 9: PDA
- 10: Halteschale für ein Mobiltelefon
- 11: Drehwinkelgeber
- 12: Geschwindigkeitsimpulsgeber
- 13: Lautsprecher von 2
- 14: Mikrofon von 2
- 15: Stellorgan von 2
- 16: Telefonbuch aus 1
- 17: Adressbuch aus 1
- 18: Sende- und Empfangseinheit von 1
- 19: Sende- und Empfangseinheit von 2
- 20: Mobilfunkmodul bzw. GSM-Modul in 1
- 21: Positionsbestimmungseinheit in 2
- 22: Mobilfunkmodul bzw. GSM-Modul in 2
- 23: Freisprecheinrichtung in 2
- 24: GPS-Antenne
- 25: Audioverstärker
- 26: Energiespeicher von 6
- 27: Sprachgenerator
- A1: Navigationsziel
- BT: Bluetooth-Verbindung
- DK1: Daten für eine Kartendarstellung von SP
- DM1: relevante Informationen zu M1
- DR1: Daten für die Routenführung von SP
- D4: Daten des GPS-Empfängers 4
- D11: Daten des Drehwinkelgebers 11
- D12: Geschwindigkeitsimpulse des Geschwindigkeitsimpulsgebers 12
- F: Fahrzeug
- K1: Kommunikationsverbindung zwischen 1 und 2
- K2: zweite Kommunikationsverbindung
- K3, K4: weitere Kommunikationsverbindung
- M1: auszuführendes Manöver
- N: Navigationssystem
- NE: Navigationseinheit
- P1: Positionsdaten von F
- PE: erdgestützte Positionsdaten von 11 und/oder 12
- PS: satellitengestützte Positionsdaten von 4
- R1: Routenführung
- SC: Sprachbefehl
- SP: Servicezentrale
- T: Trägheitssensor
- T1: Zeitpunkt
- WP1 - WP6: Wegepunkt
- WF: Wireless-Fidelity-Verbindung

## Patentansprüche

1. Navigationssystem (N) für ein Fahrzeug (F) umfassend, einen mobilen Navigationsrechner (1), eine fahrzeugseitige zentrale Steuereinheit (2), einen GPS-Empfänger (4, 5), eine Kommunikationsverbindung (K1) zwischen dem mobilen Navigationsrechner (1) und der zentralen Steuereinheit (2), wobei Positionsdaten (P1) des Fahrzeugs (F) in einer Navigationseinheit (NE) des mobilen Navigationsrechners (1) zu für die Navigation relevanten Informationen (DM1) verarbeitbar sind, wobei im Verlauf der Navigation die relevanten Informationen (DM1) zu einem jeweils auszuführenden Manöver (M1), von dem Navigationsrechner (1) an die Steuereinheit (2) übertragbar sind und wobei diese Informationen (DM1) über die zentrale Steuereinheit (2) optisch und/oder akustisch ausgebbar sind, **dadurch gekennzeichnet, dass** die Positionsdaten (P1) des Fahrzeugs (F) durch eine Positionsbestimmungseinheit (21) der zentralen Steuereinheit (2), unter Verwendung des der zentralen Steuereinheit (2) zugeordneten GPS-Empfängers (4) und/oder wenigstens eines der zentralen Steuereinheit (2) zugeordneten Sensors (11, 12) bestimmbar sind, und an den mobilen Navigationsrechner (1) übertragbar sind, wobei das Fahrzeug (F) auf der Grundlage der aus den übertragenen Positionsdaten (P1) in der Navigationseinheit (NE) des mobilen Navigationsrechners (1) für die Navigation errechneten relevanten Daten (DM1) navigierbar ist.

2. Navigationssystem nach Anspruch 1, **dadurch gekennzeichnet, dass** der GPS-Empfänger (4, 5) für eine fahrzeugbezogene Navigation in dem Fahrzeug (F) angeordnet ist, wobei insbesondere vorgesehen ist, dass der in dem Fahrzeug (F) angeordnete GPS-Empfänger (4) für eine fahrzeugbezogene Navigation durch eine drahtlose Kommunikationsverbindung (K2) mit der zentralen Steuereinheit (2) und/oder mit dem mobilen Navigationsrechner (1) in Verbindung steht.

3. Navigationssystem nach einem der vorhergehenden Ansprüche, **dadurch gekennzeichnet, dass** mit dem mobilen Navigationsrechner (1) unabhängig von der zentralen Steuereinheit (2) eine mobile Navigation durchführbar ist, wobei insbesondere vorgesehen ist, dass der Navigationsrechner (1) als Mobiltelefon (6) oder mobiles Navigationssystem (7) oder Laptop (8) oder PDA (9) oder Halteschale (10) für ein Mobiltelefon ausgebildet ist.

4. Navigationssystem nach einem der vorhergehenden Ansprüche, **dadurch gekennzeichnet, dass** der mobile Navigationsrechner (1) von einer Servicezentrale (SP) mit Daten (DR1) für eine Routenführung (R1) versorgbar ist und/oder dass der mobile Navigationsrechner (1) von einer Servicezentrale (SP) mit Daten (DK1) für eine Kartendarstellung versorgbar ist.

5. Navigationssystem nach einem der vorhergehenden Ansprüche, **dadurch gekennzeichnet, dass** die Positionsdaten (P1) des Fahrzeugs (F) durch die Positionsbestimmungseinheit (21) der zentralen Steuereinheit (2) unter Verwendung von Daten (D4) des GPS-Empfängers (4) und/oder von Daten (D11) eines Drehwinkelgebers (11) und/oder von Geschwindigkeitsimpulsen (D12) eines Geschwindigkeitsimpulsgebers (12) errechenbar sind.

6. Navigationssystem nach Anspruch 5, **dadurch gekennzeichnet, dass** die Positionsbestimmungseinheit (21) der Steuereinheit (2) Daten des der zentralen Steuereinheit (2) zugeordneten Drehwinkelgebers (11) und/oder des der zentralen Steuereinheit (2) zugeordneten Geschwindigkeitsimpulsgebers (12) zu erdgestützten Positionsdaten (PE) verarbeitet und hieraus ermittelte Koordinaten bzw. in Zeitintervallen zurückgelegte Wegstrecken über die Sende- und Empfangseinheit (19) an die Navigationseinheit (NE) des Navigationsrechners (1) übermittelt.

7. Navigationssystem nach Anspruch 1, **dadurch gekennzeichnet, dass** die Positionsbestimmungseinheit (21) der Steuereinheit (2) Daten des der zentralen Steuereinheit (2) zugeordneten GPS-Empfängers (4) zu satellitengestützten Positionsdaten (PS) verarbeitet und hieraus ermittelte Koordinaten über die Sende- und Empfangseinheit (19) an die Navigationseinheit (NE) des Navigationsrechners (1) übermittelt.

8. Navigationssystem nach einem der vorhergehenden Ansprüche, **dadurch gekennzeichnet, dass** von der Steuereinheit (2) detaillierte Karteninformationen zu einem zu durchfahrenden Korridor gemeinsam mit für die Routenführung relevanten Informationen empfangbar sind und dass die Steuereinheit (2) diese detaillierten Informationen zur Darstellung einer Karte und zur Ausgabe relevanter Informationen an definierten Wegpunkten auf der Basis von von der Steuereinheit (2) vorgenommenen Positionsberechnungen nutzt.

## Claims

1. A navigation system (N) for vehicle (F) comprising a mobile navigation computer (1), a vehicle-side central control unit (2), a GPS receiver (4, 5), a communication link (K1) between the mobile navigation computer (1) and the central control unit (2), wherein position data (P1) of the vehicle (F) can be processed in a navigation unit (NE) of the mobile navigation computer (1) to provide information (DM1) relevant for navigation, wherein in the course of the navigation the information (DM1) relevant for each maneuver (M1) to be carried out can be transmitted from the navigation computer (1) to the control unit (2) and wherein said information (DM1) can be optically and/or acoustically output by means of the central control unit (2), **characterized in that** the position data (P1) of the vehicle (F) can be determined by a position determination unit (21) of the central control unit (2) by using the GPS-receiver (4) assigned to the central control unit (2) and/or at least one sensor (11, 12) assigned to the control unit (2), and can be transferred to the mobile navigation computer (1), wherein the vehicle (F) can be navigated on the basis of the relevant data (DM1) calculated from the transferred position data (P1) in the navigation unit (NE) of the mobile navigation computer (1) for the navigation.

2. A navigation system according to claim 1, **characterized in that** the GPS-receiver (4, 5) is arranged in the vehicle (F) for a vehicle-related navigation, wherein it is provided in particular, that the GPS-receiver (4) arranged in the vehicle (F) for a vehicle-related navigation is connected by a wireless communication link (K2) with the central control unit (2) and/or with the mobile navigation computer (1).

3. A navigation system according to one of the preceding claims, **characterized in that** a mobile navigation is feasible with the mobile navigation computer (1) independent of the central control unit (2), wherein it is provided in particular, that the navigation computer (1) is designed as a mobile telephone (6) or mobile navigation system (7) or laptop (8) or personal digital assistant (PDA) (9) or holder (10) for a mobile telephone.

4. A navigation system according to one of the preceding claims, **characterized in that** the mobile navigation computer (1) can be provided by a service center (SP) with data (DR1) for route guidance (R1) and/or that the mobile navigation computer (1) can be provided by a service center (SP) with data (DK1) for a map display.

5. A navigation system according to one of the preceding claims, **characterized in that** the position data (P1) of the vehicle (F) can be calculated by the position determination unit (21) of the central control unit (2) by using data (D4) of the GPS-receiver (4) and/or data (D11) of a rotary encoder (11) and/or speed pulses (D12) of a speed pulse generator (12).

6. A navigation system according to claim 5, **characterized in that** the position determination unit (21) of the control unit (2) processes data of the rotary encoder (11) assigned to the central control unit (2) and/or of the speed pulse generator (12) for ground-based position data (PE) assigned to the central control unit (2) and transmits coordinates determined therefrom or stretches covered in time intervals via the transmitter- and receiver unit (19) to the navigation unit (NE) of the navigation computer (1).

7. A navigation system according to claim 1, **characterized in that** the position determination unit (21) of the control unit (2) processes data of the GPS-receiver (4) for satellite-based position data (PS) assigned to the central control unit (2) and transmits coordinates determined therefrom via the transmitter- and receiver unit (19) to the navigation unit (NE) of the navigation computer (1).

8. A navigation system according to one of the preceding claims, **characterized in that** detailed map information for a corridor to be passed through together with information relevant to the route guidance can be received by the control unit (2) and that the control unit (2) uses this detailed information to display a map and to release relevant information at defined waypoints on the basis of position calculations made by the control unit (2).

## Revendications

1. Système de navigation (N) pour un véhicule (F), comportant un calculateur de navigation (1) mobile, une unité de commande (2) centrale du côté véhicule, un récepteur GPS (4, 5), une liaison de communication (K1) entre le calculateur de navigation (1) mobile et l'unité de commande (2) centrale, les données de position (P1) du véhicule (F) pouvant être traitées dans une unité de navigation (NE) du calculateur de navigation (1) mobile pour obtenir des informations (DM1) pertinentes pour la navigation, lesdites informations (DM1) pertinentes pour une manoeuvre (M1) à effectuer dans chaque cas pouvant être transmises au cours de la navigation à partir du calculateur de navigation (1) vers l'unité de commande (2) et lesdites informations (DM1) pouvant être signalées par voie optique et/ou acoustique par l'intermédiaire de l'unité de commande (2) centrale, **caractérisé en ce que** les données de position (P1) du véhicule (F) peuvent être déterminées par une unité de détermination de la position (21) de l'unité de commande (2) centrale, moyennant l'utilisation du récepteur GPS (4) affecté à l'unité de commande (2) centrale et/ou d'au moins un capteur (11, 12) affecté à l'unité de commande (2) centrale, et peuvent être transmises vers le calculateur de navigation (1) mobile, le véhicule (F) étant apte à naviguer sur la base des données (DM1) pertinentes, calculées pour la navigation dans l'unité de navigation (NE) du calculateur de navigation (1) mobile à partir des données de position (P1) transmises.

2. Système de navigation selon la revendication 1, **caractérisé en ce que** le récepteur GPS (4, 5) pour une navigation liée au véhicule est disposé dans le véhicule (F), il est prévu en particulier que le récepteur GPS (4) pour une navigation liée au véhicule, disposé dans le véhicule (F), est en liaison via une liaison de communication (K2) sans fil avec l'unité de commande (2) centrale et/ou avec le calculateur de navigation (1) mobile.

3. Système de navigation selon l'une quelconque des revendications précédentes, **caractérisé en ce qu'**une navigation mobile peut être mise en oeuvre avec le calculateur de navigation (1) mobile indépendamment de l'unité de commande (2) centrale, il est prévu en particulier que le calculateur de navigation (1) est réalisé sous la forme d'un téléphone mobile (6) ou d'un système de navigation (7) mobile ou d'un ordinateur portable (8) ou d'un assistant numérique personnel (9) ou d'une coque de support (10) pour un téléphone mobile.

4. Système de navigation selon l'une quelconque des revendications précédentes, **caractérisé en ce que** le calculateur de navigation (1) mobile peut recevoir des données (DR1) pour un guidage routier (R1) fournies par une centrale de services (SP) et/ou **en ce que** le calculateur de navigation (1) mobile peut recevoir des données (DK1) pour une représentation cartographique fournies par une centrale de services (SP).

5. Système de navigation selon l'une quelconque des revendications précédentes, **caractérisé en ce que** les données de position (P1) du véhicule (F) peuvent être calculées par l'unité de détermination de la position (21) de l'unité de commande (2) centrale moyennant l'utilisation de données (D4) du récepteur GPS (4) et/ou de données (D11) d'un capteur d'angle de rotation (11) et/ou d'impulsions de vitesse (D12) d'un capteur d'impulsions de vitesse (12).

6. Système de navigation selon la revendication 5, **caractérisé en ce que** l'unité de détermination de la position (21) de l'unité de commande (2) traite des données du capteur d'angle de rotation (11) affecté à l'unité de commande (2) centrale et/ou du capteur d'impulsions de vitesse (12) affecté à l'unité de commande (2) centrale pour obtenir des données de position (PE) terrestres et transmet des coordonnées, calculées à partir de ces dernières, ou des trajets parcourus dans des intervalles de temps vers l'unité de navigation (NE) du calculateur de navigation (1) via l'unité d'émission et de réception (19).

7. Système de navigation selon la revendication 1, **caractérisé en ce que** l'unité de détermination de la position (21) de l'unité de commande (2) traite des données du récepteur GPS (4) affecté à l'unité de commande (2) centrale pour obtenir des données de position (PS) basées sur des satellites et transmet des coordonnées, calculées à partir de ces dernières, vers l'unité de navigation (NE) du calculateur de navigation (1) via l'unité d'émission et de réception (19).

8. Système de navigation selon l'une quelconque des revendications précédentes, **caractérisé en ce que** des informations cartographiques détaillées pour un corridor à suivre peuvent être reçues par l'unité de commande (2) conjointement avec des informations pertinentes pour le guidage routier, et **en ce que** l'unité de commande (2) utilise ces informations détaillées pour représenter une carte et pour afficher des informations pertinentes en des points définis du trajet sur la base des calculs de position effectués par l'unité de commande (2).
